Europäisches Patentamt

European Patent Office

Office européen des brevets

(11) Veröffentlichungsnummer: **0 164 676**

**A1**

(12) **EUROPÄISCHE PATENTANMELDUNG**

(21) Anmeldenummer: 85106851.0

(22) Anmeldetag: 03.06.85

(51) Int. Cl.⁴: **H 04 L 25/49**

(30) Priorität: 04.06.84 DE 3420801

(43) Veröffentlichungstag der Anmeldung:
18.12.85 Patentblatt 85/51

(84) Benannte Vertragsstaaten:
AT BE CH DE FR GB IT LI NL SE

(71) Anmelder: Siemens Aktiengesellschaft
Berlin und München Wittelsbacherplatz 2
D-8000 München 2(DE)

(72) Erfinder: Pospischil, Reginhard, Dr.-Ing.
Gabriel-von-Seidl-Strasse 15
D-8032 Gräfelfing(DE)

(54) Selbstsynchronisierender Verwürfler.

(57) Selbstsynchronisierender Verwürfler für hohe Bitraten
mit einer Anzahl parallel arbeitender Verwürflerstufen, die
jeweils die Reihenschaltung eines ersten (A1) und eines zweiten (A2) Modulo-2-Addierers und wenigstens einer Schieberegisterstufe (SR) darstellen; zur Unterdrückung von
Kurzperioden kann zwischen 1. und 2. Modulo-2-Addierer ein
dritter Modulo-2-Addierer eingefügt sein, durch den bei Auftreten von Kurzperioden wenigstens ein Bit des durchlaufenden Signals invertiert wird.

Die Anwendung kann alternativ zu bisherigen Verwürflern erfolgen, wobei die Verarbeitungsgeschwindigkeit auf
einen Bruchteil der bisherigen verringert ist und dadurch auf
eine billigere Halbleitertechnologie (CMOS) zurückgegriffen
werden kann.

**FIG 1**

0164676

Siemens Aktiengesellschaft
Berlin und München

Unser Zeichen:
VPA
84 P 1421 E

## Selbstsynchronisierender Verwürfler

Die Erfindung betrifft einen selbstsynchronisierenden Verwürfler entsprechend dem Oberbegriff des Patentanspruchs 1.

Bei der digitalen Signalübertragung können Impulsmuster auftreten, die einen störenden Gleichstromanteil aufweisen, oder deren Energieanteil bei bestimmten diskreten Frequenzen besonders hoch ist. Zur Vermeidung dieser Impulsmuster wird das zu übertragende digitale Signal durch Modulo-2-Addition mit einer Pseudo-Zufallsfolge sendeseitig verwürfelt. Empfangsseitig erfolgt durch eine weitere Modulo-2-Addition mit der bereits sendeseitig verwendeten Pseudo-Zufallsfolge die Entwürflung. Die dabei notwendige Synchronisation der sendeseitig und empfangsseitig verwendeten Pseudo-Zufallsgeneratoren kann durch Verwendung freilaufender, sogenannter multiplikativer bzw. selbstsynchronisierender Verwürfler und Entwürfler umgangen werden.

Mit dem weiteren Ausbau des digitalen Fernmeldenetzes werden zwischen zentralen Punkten dieses Netzes Übertragungseinrichtungen für Signale sehr hoher Schrittgeschwindigkeit erforderlich. Daraus ergibt sich die Notwendigkeit, Verwürfler und Entwürfler für digitale Signale sehr hoher Taktfrequenz aufzubauen.

Aus den Siemens Forschungs- und Entwicklungsberichten Band 6 (1977) Nr. 1, Seiten 1 bis 5 ist bereits eine Möglichkeit bekannt, Verwürfler für digitale Signale hoher Taktfrequenz aufzubauen. Die digitalen Signale

Ah 1 Or / 28.5.1984

0164676

werden dabei in mehreren parallelen Kanälen mit entsprechend niedrigerer Bitfolgefrequenz verwürfelt und die entstandenen Signale durch Multiplexen zusammengefaßt. Analog ist die Empfangszeile aufgebaut, bei der sich an einen Demultiplexer die parallele Entwürfelung in mehreren Kanälen anschließt. Damit ergibt sich neben dem hohen Aufwand die Notwendigkeit, Multiplexer und Demultiplexer miteinander zu synchronisieren.

Von den Postbehörden ist die Verwürfelung für die einzelnen Hierarchiestufen des digitalen Weitverkehrsnetzes genormt. So ist beispielsweise von der internationalen Postbehörde in den CCITT-Empfehlungen unter V27 bis ein Verwürfler mit einer Verwürflerperiode von 127 Bit vorgeschrieben.

Die Aufgabe bei der vorliegenden Erfindung besteht darin, einen auch für die Übertragung digitaler Signale hoher Bitfolgefrequenz geeigneten selbstsynchronisierenden Verwürfler zu finden, der bei vergleichsweise geringerem Aufwand auf eine Multiplexeinrichtung verzichtet und dessen Verwürflerperiode unabhängig von der Arbeitsgeschwindigkeit wählbar ist, außerdem muß eine Unterdrückung unerwünschter Kurzperioden mit vertretbarem Aufwand möglich sein.

Erfindungsgemäß wird die Aufgabe bei einem selbstsynchronisierenden Verwürfler der eingangs genannten Art durch die im Kennzeichen des Patentanspruchs 1 enthaltenen Merkmale gelöst.

Besonders vorteilhaft bei der erfindungsgemäßen Lösung ist der auch bei längeren Verwürflern übersichtliche Aufbau aus rein digitalen Gliedern, der eine Integration wesentlich erleichtert.

Bevorzugte Weiterbildungen des erfindungsgemäßen Verwürflers sind in den Patentansprüchen 2 bis 4 beschrieben.

Die Erfindung soll im folgenden anhand der Zeichnung
näher erläutert werden.

In der Zeichnung zeigt

Fig. 1    die Schaltung einer einzelnen Verwürflerstufe,
Fig. 2    die Schaltung eines Verwürflers mit vier parallelen mit     Verwürflerstufen und mit einer
          Verwürflerperiode von 127 Bit,
Fig. 3    die Schaltung eines Verwürflers mit vier parallelen Verwürflerstufen und mit einer Verwürflerperiode von 31 Bit und
Fig. 4    die Schaltung eines Verwürflers mit fünf para-
          llelen Verwürflerstufen mit einer Verwürfler-
          periode von 127 Bit und einer zusätzlichen Einrichtung zur Unterdrückung von Kurzperioden.

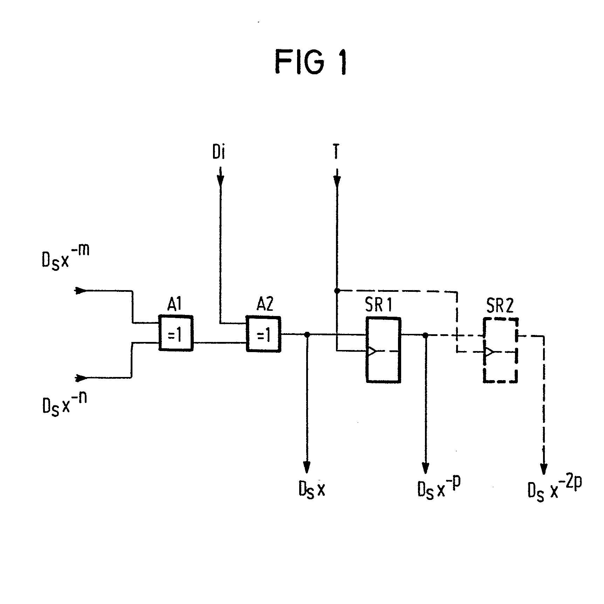

Die in der Fig. 1 dargestellte Verwürflerstufe ist Teil
eines n-stufigen Verwürflers. Die Verwürflerstufe enthält einen ersten und einen zweiten Modulo-2-Addierer 1,
A2 sowie eine erste und gegebenenfalls eine zweite
Schieberegisterstufe SR1, SR2. Die Verwürflerstufe dient
zur Verwürfelung des p-ten-Bits des digitalen Signals,
so daß am Ausgang der ersten Schieberegisterstufe SR1
das entsprechende verwürfelte Bit Ds $\bar{x}^{-p}$ und am Ausgang
der zweiten Schieberegisterstufe SR2, eine Taktperiode
später, das verwürfelte Bit Ds $x^{-2p}$ abgegeben wird, während das Ausgangssignal der Verwürflerstufe vom Ausgang
des zweiten Modulo-2-Addierer bzw. von Eingang der ersten
Schieberegisterstufe SR1 entnehmbar ist. Die erste Schieberegisterstufe SR1 entspricht also bezogen auf das Signal an Di der p-ten-Schieberegisterstufe des gesamten Verwürflers. Eine einzelne Verwürflerstufe enthält einen Eingang für das Ausgangssignal Ds $x^{-n}$ der n-ten Verwürflerstufe. Beide Eingänge sind gleichzeitig die Eingänge des ersten Modulo-2-Addierers A1, dessen Ausgang mit dem einen Eingang des zweiten Modulo-2-Addierers A2 verbunden ist und dessen anderer Eingang mit dem Eingang für das in dieser Stufe zu verwürfelnde Eingangssignal Di verbunden ist. Der Ausgangsanschluß des zweiten Modulo-2-Addierers A2 ist der Ausgangsanschluß für das Ausgangssignal Ds dieser Verwürflerstufe, er ist außerdem mit dem Eingang der ersten Schieberegisterstufe SR1 verbunden, die ebenso wie die zweite aus einem getakteten D-Flip-Flop besteht und deren Ausgang mit dem D-Eingang einer zweiten Schieberegisterstufe SR2 verbunden sein kann. Die Taktfrequenz der Schieberegisterstufen entspricht dabei dem Parallel-Bit-Takt, also dem Bit-Takt der digtalen Signale geteilt durch die Anzahl p der parallelen Eingänge des Verwürflers. Mit n ist dabei die Anzahl der Schieberegisterstufen des Verwürflers bezeichnet, während als m-te Stufe diejenige bezeichnet wird, deren Ausgangssignal neben dem der n-ten Stuf auf den Eingang rückgekoppelt wird, wobei m wenigstens um eins kleiner als n ist. Beim bekannten selbstsynchronisierenden seriellen Verwürfler sind bekanntermaßen der Ausgang der m-ten und der Ausgang der n-ten-Stufe über wenigstens einen Modulo-2-Addierer mit dem Eingang der ersten Schieberegisterstufe verbunden. Im vorliegenden Falle sind die Verwürflerstufen mit einer oder zwei Schieberegisterstufen parallel angeordnet, wobei jede der p Verwürflerstufen über einen Eingang verfügt und die Eingänge beispielsweise mit den parallelen Ausgängen eines Serien-Parallel-Wandlers als Quelle eines digitalen Signals mit p parallelen Bits verbunden sind. Für den Aufbau eines Verwürflers mit n Verwürflerstufen

0164676
VPA 84 P 1421 E

werden n-p Verwürflerstufen mit jeweils zwei Schieberegisterstufen und 2 p-n Verwürflerstufen mit jeweils einer Schieberegisterstufe benötigt. In Schieberichtung gesehen folgen dabei zunächst die n-p Verwürflerstufen mit zwei Schieberegisterstufen, an die sich die 2 p-n Verwürflerstufen mit nur einer Schieberegisterstufe anschließen. Bei einer Schieberichtung von links nach rechts hat dann die erste Verwürflerstufe links von der betrachteten Verwürflerstufe die Ausgangssignale Ds $x^{+1}$, Ds $x^{1-p}$ und Ds $x^{1-2p}$, sofern es sich um eine Verwürflerstufe mit zwei Schieberegisterstufen handelt und entsprechend die erste folgende Verwürflerstufe rechts von der betrachteten Verwürflerstufe die Ausgangssignale Ds $x^{-1}$, Ds $x^{-1-p}$ und Ds $x^{-1-2p}$. Entsprechend hat die zweite Verwürflerstufe links von einer betrachteten Stufe die Ausgangssignale Ds $x^2$, Ds $x^{2-p}$ und Ds $x^{2-2p}$ während die zweite Verwürflerstufe rechts an der betrachteten Stufe die Ausgangssignale Ds $x^{-2}$, Ds $x^{-2-p}$ und Ds $x^{-2-2p}$ hat.

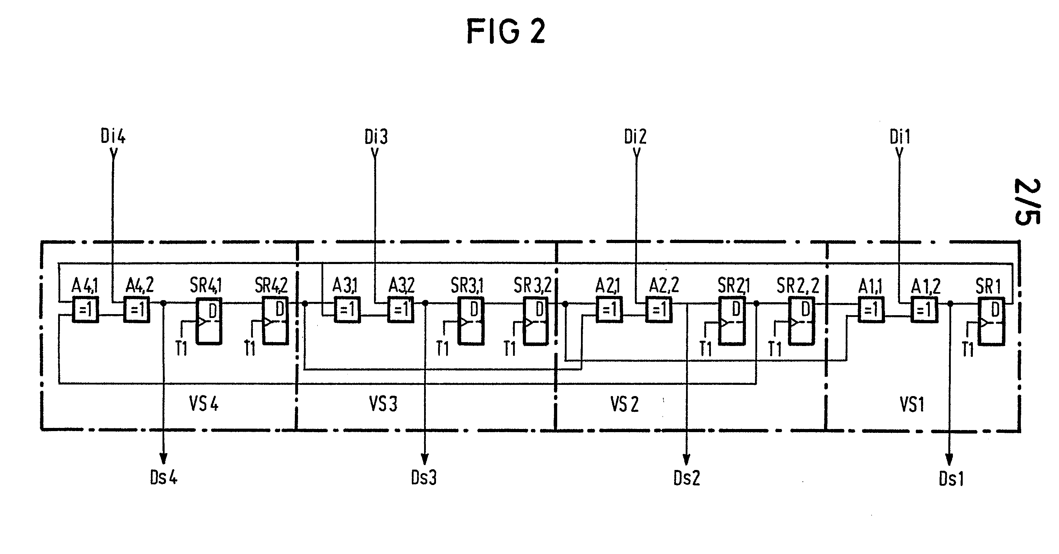

In der Fig. 2 ist die Zusammenschaltung von vier Verwürflerstufen nach der Fig. 1 zu einem Verwürfler dargestellt, der sieben Schieberegisterstufen mit Rückkopplungen nach der sechsten und siebten Schieberegisterstufe umfaßt und über vier parallele Eingänge verfügt. Entsprechend Fig. 1 sind also p = 4, n = 7 und m = 6, wobei die vier Eingänge für Signale Di und die vier Ausgänge für Signale Ds parallel geschaltet sind. Für eine serielle Übertragung sind also dem Verwürfler ein vierstufiger Serien-Parallel-Wandler vor- und ein vierstufiger Parallel-Serien-Wandler nachzuschalten. Die Serien-Parallel-Wandlungen und die entsprechenden Parallel-Serien-Wandlungen müssen wegen der Speichereigenschaften der Wandler nicht bitsynchron erfolgen, auch

0164676
VPA 84 P 1421 E

eine Wortsynchronisation zwischen sendeseitigen Verwürfler (Scrambler) und empfangsseitigem Entwürfler (Descrambler) ist nicht erforderlich.

Der Verwürfler nach der Fig. 2 enthält vier Verwürflerstufen VS1 ... VS4, die jeweils einen Eingang Di 1 ... Di4 zur parallelen Aufnahme von 4 Bit des zu verwürfelnden digitalen Signals und einen Ausgang Ds1 ... Ds4 aufweisen. Mit insgesamt n = 7 Schieberegisterstufen ergibt sich eine Verwürfelperiode von $2^7-1$ = 127 Bit, aufgrund der vier Eingänge ist p = 4 während m = 6 und n = 7 ist. Entsprechend der vorstehend geschilderten Regel folgen in Schieberichtung zunächst n - p = 3 Verwürflerstufen mit zwei Schieberegistern und daran anschließend 2p -n = eine Verwürflerstufe mit nur einer Schieberegisterstufe, folglich hat die erste Verwürflerstufe VS1 nur eine Schieberegisterstufe SR1. Die übrigen Verwürflerstufen VS2, VS3, VS4 enthalten demgegenüber jeweils zwei Schieberegisterstufen SR2.1, SR2.2, SR3.1, SR3.2, SR4.1, SR4.2, die entsprechend der Fig. 1 mit den vorgeschalteten Modulo-2-Addierern verbunden und außerdem an eine gemeinsame Taktquelle T1 angeschlossen sind. Die zweiten Eingänge der ersten Modulo-2-Addierer A1.1, A2.1, A3.1 der ersten bis dritten Verwürflerstufe sind jeweils mit dem Ausgang der zweiten Schieberegisterstufe der vorhergehenden Verwürflerstufe, also mit den Schieberegisterstufen SR2.2, SR3.2, SR4.2 verbunden. Der entsprechende Eingang des 1. Modulo-2-Addierers A4.1 der vierten Verwürflerstufe VS4 ist mit dem Ausgang der ersten und einzigen Schieberegisterstufe SR1 der ersten Verwürflerstufe VS1 verbunden. Die ersten Eingänge der ersten Modulo-2-Addierer A1.1, A2.1 der ersten und der zweiten Verwürflerstufe VS1, VS2 sind jeweils mit dem Ausgang der zweiten Schieberegisterstufe SR3.2, SR4.2 der jeweils zweiten vorhergehenden Verwürflerstufe VS3, VS4 verbunden, also ist der erste Eingang des Modulo-2-Addierers A1.1 an den Ausgang der Schieberegisterstufe SR3.2 und der erste Eingang des Modulo-2-Addierers A2.1 ist an den Ausgang der Schieberegisterstufe SR4.2 angeschlossen. Eine Änderung ergibt sich hinsichtlich der dritten und der vierten Verwürflerstufe VS3, VS4 da im Hinblick auf die entsprechende zyklische Vertauschung die beiden ersten Eingänge der jeweils ersten Modulo-2-Addierer A3.1, A4.1 miteinander und mit dem Ausgang der ersten und einzigen Schieberegisterstufe SR1 der ersten Verwürflerstufe verbunden sind. Das verwürfelte Signal ergibt sich aus dem Eingangssignal Di der betreffenden Stufe und den Ausgangssignalen Ds x$^{-6}$ und Ds x$^{-7}$ der sechsten und der siebenten Stufe rechts der betrachteten Verwürflerstufe.

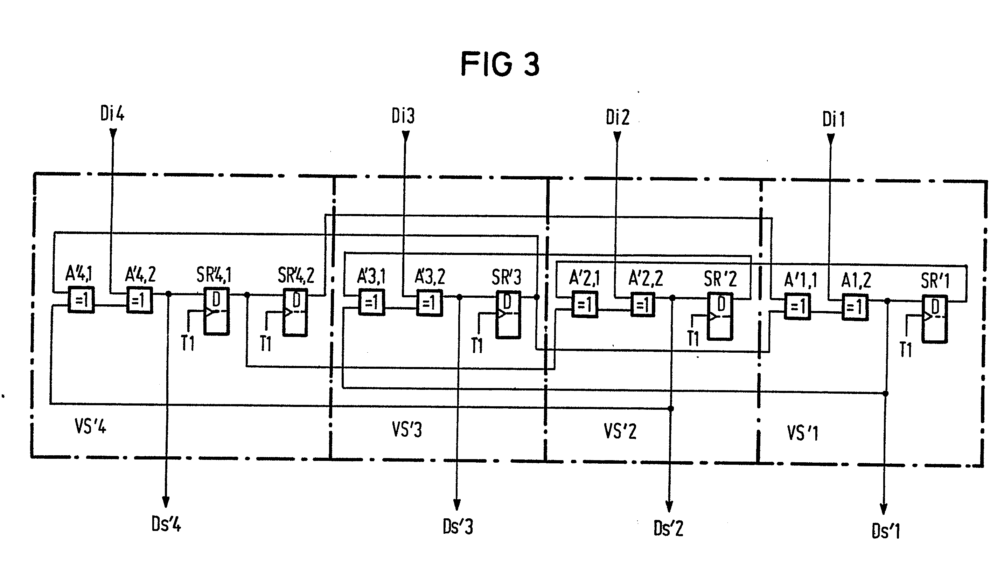

In der Fig. 3 ist ein weiterer Verwürfler mit vier parallelen Eingängen dargestellt, der aber gegenüber dem Verwürfler nach Fig. 2 nicht sieben sondern nur fünf Schieberegisterstufen enthält und dessen Verwürflerperiode deshalb nur 31 Bit beträgt. Entsprechend ist n = 5 und m = 2, entsprechend der bereits geschilderten Aufbauregel sind n - p = 5 - 4 = eine Verwürflerstufe mit zwei Schieberegisterstufen und 2p - n = 8 - 5 = drei Verwürflerstufen mit nur einer Schieberegisterstufe vorgesehen. Die Verwürflerstufen VS1, VS2 und VS3 enthalten damit nur jeweils eine Schieberegisterstufe SR'1, SR'2, SR'3, nur die vierte Verwürflerstufe VS4 enthält zwei Schieberegisterstufen SR'4.1, SR'4.2. Die Rückkopplung vom Ausgang der ersten Schieberegisterstufe SR'1 der ersten Verwürflerstufe VS'1 erfolgt auf den einen Eingang des ersten Modulo-2-Addierers A2.1 der zweiten Verwürflerstufe VS'2. Der Ausgang der Schieberegisterstufe SR'2 dieser Verwürflerstufe ist verbunden mit dem einen Eingang des ersten Modulo-2-Addierers A'3.1 der dritten Verwürflerstufe VS'3. Der Ausgang der Schieberegisterstufe SR'3 dieser Verwürflerstufe ist mit dem anderen Eingang des ersten Modulo-2-Addierers A'1.1 der ersten Verwürflerstufe und mit dem einen Eingang des ersten Modulo-2-Addierers A'4.1 der vierten Verwürflerstufe VS'4 verbunden. Der Ausgang der ersten Schieberegisterstufe SR'4.1 der vierten Verwürflerstufe VS'4 ist mit dem anderen Eingang des ersten Modulo-2-Addierers A'2.1 der zweiten Verwürflerstufe VS'2 sowie mit den D-Eingang der zweiten Schieberegisterstufe SR'4.2 der vierten Verwürflerstufe verbunden. Deren Ausgang ist mit dem einen Eingang des ersten Modulo-2-Addierers der ersten Verwürflerstufe VS'1 verbunden. Der erste Ausgang Ds'1 der ersten Verwürflerstufe ist mit dem weiteren Eingang des ersten Modulo-2-Addierers A'3.1 der dritten Verwürflerstufe verbunden, entsprechend ist der Ausgang Ds'2 der zweiten Verwürflerstufe mit dem zweiten Eingang des ersten Modulo-2-Addierers A'4.1 der vierten Verwürflerstufe VS'4 verbunden. Der Verwürfler nach der Fig. 3 stellt also eine Alternative zum Verwürfler nach der Fig. 2 dar, die bei geringfügig verringertem Aufwand bei gleicher Anzahl der parallel verarbeiteten Bits eine verkürzte Verwürflerperiode ergibt.

Bei den bekannten Verwürflern ist es in Abhängigkeit vom Eingangssignalmuster möglich, daß bei bestimmten Eingangssignalmustern bestimmte Zustände der Verwürflerperiode übersprungen werden und periodische Ausgangssignalfolgen vergleichsweise kurzer Dauer auftreten. Aus diesem Grunde enthalten praktisch angewendete Verwürfler zusätzlich weitere Schieberegisterstufen. In den CCITT-Empfehlungen V27 und V27bis wird beispielsweise ein 7-stufiger Verwürfler beschrieben, der zur Vermeidung von Kurzperioden um weitere 5 Schieberegisterstufen auf 12 Stufen ergänzt ist. Beim Verwürfler nach der Empfehlung V27bis wird dann jeweils der Inhalt der Stufen 8, 9 und 12 mit dem logischen Zustand am Eingang der Schieberegisterkette verglichen. Stimmt eines der verglichenen Paare für einen Zeitraum von mindestens 33 Bit kontinuierlich miteinander überein, so wird das nächstfolgende Eingangsbit invertiert, so daß längerperiodische Ausgangssignalfolgen mit 1, 2, 3, 4, 6, 8, 9 und 12 Bitperiodendauer unterdrückt werden. Mit dem beschriebenen Zusatzaufwand können also beispielsweise periodische Ausgangssignalfolgen mit 5, 7, 10 und 11 Bitperiodendauer nicht unterdrückt werden, eine Unterdrückung auch dieser Kurzperioden würde jedoch den Aufwand weiter steigen lassen, so daß bei der Entwicklung derartiger Verwürfler ein anwendungsbezogener Kompromiß erforderlich ist. Dieser Kompromiß ist auch im Hinblick auf die Anwendung der Verwürfler bei höheren Übertragungsgeschwindigkeiten erforderlich, da eine Verlängerung der Schieberegisterketten die Einsatzmöglichkeiten bei höheren Übertragungsgeschwindigkeiten einschränkt.

Bei den parallelen Verwürflern nach den Fig. 2 und 3 und auch bei anderen Verwürflern, die die in der Fig. 1 beschriebene Verwürflerstufe in Parallelbetrieb verwenden, müssen alle Verwürflerstufen mittels einer Einrichtung zur Kurzperiodenunterdrückung auf das Auftreten von Kurzperioden überwacht werden, wenn der Verwürfler mit bekannten seriellen Verwürflern kompatibel sein soll, die die Schieberegisterstufen in Serienschaltung enthalten.

Die Unterdrückung unerwünschter Kurzperioden erfolgt im Prinzip mittels einer an den eigentlichen Verwürfler angeschlossenen Zähleinrichtung für übereinstimmende Bits, die im Abstand einer zu unterdrückenden Kurzperiode auftreten. Die Zähleinrichtung gibt bei Überschreiten einer voreingestellten Anzahl übereinstimmender Bits einen Impuls ab, der an die Verwürflerstufen weitergeleitet wird.

0164676

VPA 84 P 1421 E

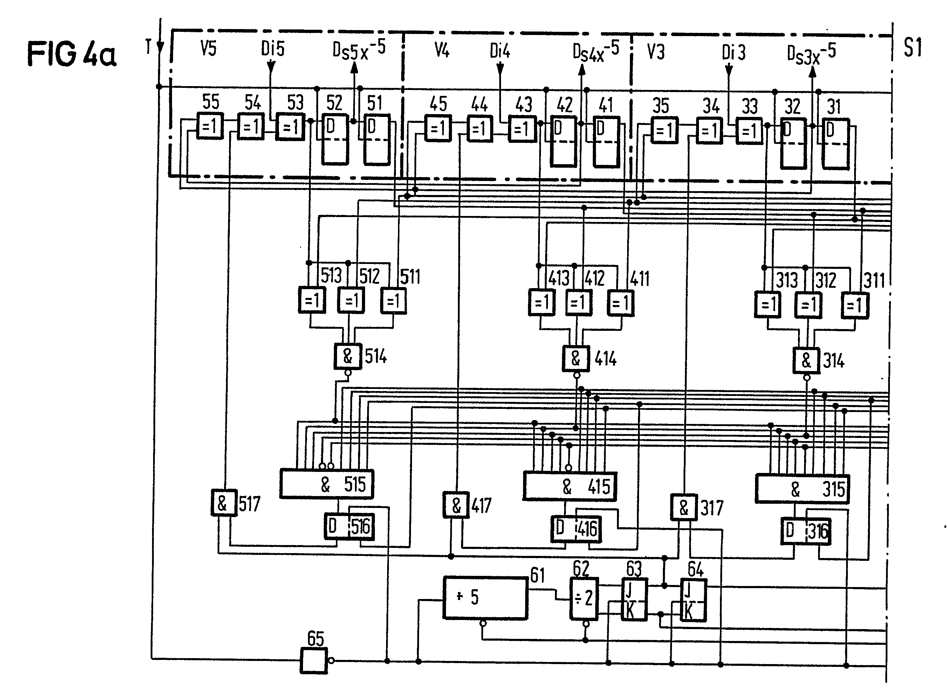

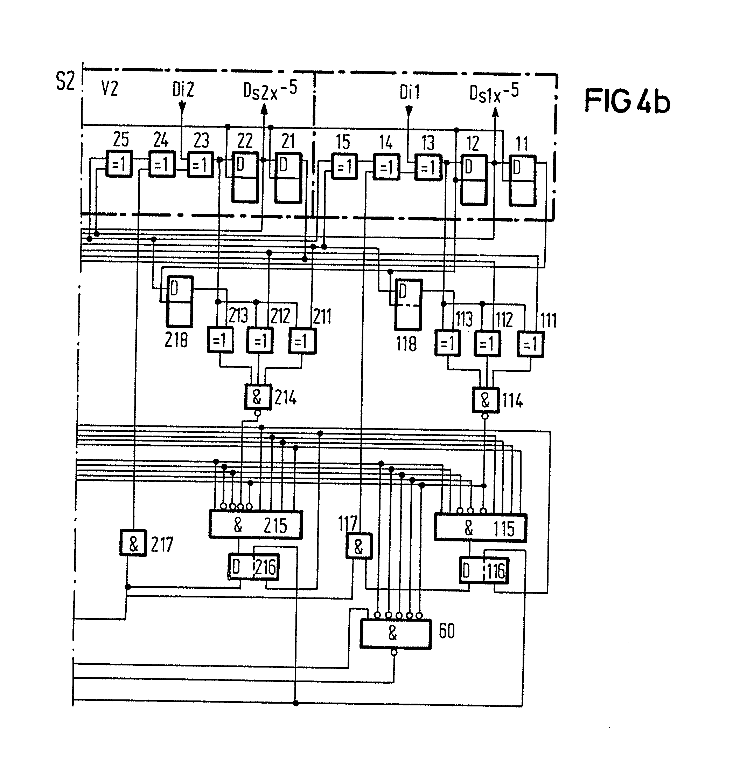

Die Zähleinrichtung bildet also den wesentlichen Teil der Einrichtung zur Kurzperiodenunterdrückung, zur Verbindung der Verwürflerstufen mit der Zähleinrichtung sind die Verwürflerstufen entsprechend Fig. 4 um einen weiteren Modulo-2-Addierer 54, 44, 34, 24, 14 ergänzt. Dieser Addierer ist zwischen erstem und zweitem Modulo-2-Addierer A1, A2, nach der Fig. 1 so eingefügt, daß der eine Eingang des dritten Modulo-2-Addieres mit dem Ausgang des ersten Modulo-2-Addierers verbunden ist, daß der zweite Eingang des dritten Modulo-2-Addierers mit einem zugeordneten Ausgang der Einrichtung zur Kurzperiodenunterdrückung verbunden ist und daß an den Ausgang des dritten Modulo-2-Addierers derjenige Eingang des zweiten Modulo-2-Addierers angeschlossen ist, der bisher mit dem Ausgang des ersten Modulo-2-Addierers verbunden ist. In der Fig. 4 ist ein Verwürfler aus 5 derartig erweiterten Verwürflerstufen V1 ... V5 dargestellt, wobei der linke Teil der Fig. 4 mit den Verwürflerstufen V3, V4, V5 in Fig. 4a und der rechte Teil mit den Verwürflerstufen V1, V2 in Fig. 4b dargestellt ist. Beide Schaltungsteile sind durch die Linien S1, S2 voneinander getrennt. Der Verwürfler nach der Fig. 4 besitzt 5 parallele Eingänge so daß p = 5 ist, außerdem sind zur Erzeugung einer Schiebeperiode von $2^7-1$ = 127 Bit n = 7 Schieberegisterstufen verwendet, wobei die Rückkopplung nach der m = 6. und n = 7. Stufe erfolgt. Entsprechend der bereits beschriebenen Regel sind deshalb zunächst n - p = 7-5 = 2 Verwürflerstufen V5 und V4 mit jeweils zwei Schieberegisterstufen 51, 52 und 41, 42 vorgesehen, an die sich 2p-n = 10-7 = 3 Verwürflerstufen V3, V2, V1 mit jeweils einer Schieberegisterstufe 32, 22, 12, anschließen. Die in den Verwürflerstufen V1, V2, V3 zusätzlich enthaltenen weiteren Schieberegisterstufen 31, 21, 11 sind also für die Funktion des Verwürflers nicht erforderlich, sie sind bereits Teil der Einrichtung zur Kurzperiodenunterdrückung. Zu dieser Anordnung gehören 5 Gruppen aus
jeweils drei Modulo-2-Addierern, deren Ausgänge über je ein
NAND-Gatter 114, 214, 314, 414, 514 zusammengefaßt sind.
Jede dieser 3er-Gruppen ist einer Verwürflerstufe zugeordnet, wobei die ersten Eingänge jedes der Modulo-2-
Addierer 111, 112, 113; 211, 212, 213; 311, 312, 313;
411, 412, 413; 511, 512, 513 miteinander und mit dem
D-Eingang der ersten Schieberegisterstufe der zugeordneten Verwürflerstufe verbunden sind. Die zweiten Eingänge der beiden Modulo-2-Addierer der fünf Gruppen sind
mit den Ausgängen der einzelnen Schieberegisterstufen so
verbunden, daß in jeder 3er-Gruppe jeweils das am Eingang der ersten Schieberegisterstufe einer Verwürflerstufe anliegende Bit mit dem 8., 9. und 12. gespeicherten Bit verglichen wird. Da die Verwürflerstufen insgesamt nur 10 Schieberegisterstufen enthalten und damit nur
10 Bit gespeichert werden können, wurden zusätzlich D-
Flip-Flops 118 und 218 vorgesehen, die den zweiten Eingängen der ersten Modulo-2-Addierer 113, 213 der ersten
und der zweiten 3er-Gruppe vorgeschaltet sind, die mit
der gleichen Taktquelle wie die Schieberegisterstufen der
Verwürflerstufen verbunden sind und deren D-Eingänge mit
den Ausgängen der zweiten Schieberegisterstufen der vierten bzw. fünften Verwürflerstufe verbunden sind. Bei
Gleichheit des am Eingang der ersten Schieberegisterstufe einer k-ten Verwürflerstufe anliegenden Bits mit
einem der gespeicherten Bits Nr. 8, 9 und 12 ergibt sich
am Ausgang des entsprechenden k-ten NAND-Gatters 114,
214, 314, 414, 514 jeweils der logische 1-Pegel, der über
jeweils einen invertierenden Eingang an das NAND-Gatter
60 abgegeben wird, so daß dieses über seinen invertierenden Ausgang die Teilerkette 61, 62, 63, 64 freigibt.
Die Teilerkette ist über den Inverter 65 an die Quelle
für den Worttakt D der digitalen Signale angeschlossen.
und enthält einen ersten Teiler 61 mit dem Teilerverhält-

0164676

VPA 84 P 1421 E

nis 2:1 und 2 JK-Flip-Flops.

Die Einrichtung zur Kurzperiodenunterdrückung enthält weiterhin fünf UND-Gatter 115, 215, 315, 415, 515 mit jeweils einer ersten Gruppe von fünf Eingängen, die jeweils getrennt mit den Ausgängen der NAND-Gatter 114, 214, 314, 414, 514 verbunden sind und eine zweite Gruppe von jeweils vier Eingängen. Jeder dieser vier Eingänge der zweiten Gruppe ist an den invertierenden Ausgang eines der D-Flip-Flops 116, 216, 316, 416, 516 angeschlossen, deren D-Eingänge an den Ausgang eines der UND -Gatter mit neun Eingängen angeschlossen sind. Die invertierenden Ausgänge dieser D-Flip-Flops sind jeweils mit einem Eingang eines der Gatter verbunden, an dessen Gatterausgang das D-Flip-Flop nicht angeschlossen ist. Die nichtinvertierenden Ausgänge der D-Flip-Flops sind über ein weiteres UND-Gatter 117, 217, 317, 417, 517 mit den zweiten Eingängen der dritten Modulo-2-Addierer jeder Verwürflerstufe V1 ... V5 verbunden. Die zweiten Eingänge der an die dritte bis fünfte Verwürflerstufe angeschlossenen UND-Gatter sind mit dem Ausgang des in der Teilerkette enthaltenen JK-Flip-Flops 63 verbunden, diesem ist ein weiteres JK-Flip-Flop 64 nachgeschaltet, dessen Ausgang mit den zweiten Eingängen der UND-Gatter 117, 217 verbunden sind, die ausgangsseitig mit der ersten bzw. zweiten Verwürflerstufe verbunden sind.

Die beschriebene Freigabe der Teilerkette 61 bis 64 führt dazu, daß über eines der freigegebenen UND-Gatter 117, 217, 317, 417, 517 und die zusätzlichen dritten Modulo-2-Addierer in einer der Verwürflerstufen V1 bis V5 ein Bit invertiert und dadurch eine auftretende Kurzperiode beendet wird. Ab dem erstmaligen Erkennen des Impulsmusters entsprechend einer Kurzperiode wird die Periodizität für jedes folgende Bit erkannt, solange das Eingangsmuster erhalten bleibt, damit sind spätestens nach einer Paralleltaktperiode entsprechend 5 Bit alle UND-Gatter 114, 214, 314, 414, 514 auf dem logischen 1-Pegel. Die UND-Gatter mit neuen Eingängen 115, 215, 315, 415, 515 zusammen mit den nachgeschalteten D-Flip-Flops 116, 216, 316, 416, 516 dienen nun zur Speicherung der Information darüber, bei welchem am Eingang des ersten Schieberegisters einer Verzögerungsstufe anliegenden Bits zum ersten Mal eine Kurzperiode erkannt wurde. Die Änderung des logischen Wertes eines am Eingang einer Schieberegisterstufe einer Verwürflerstufe anliegenden Bits erfolgt nicht unmittelbar nach dem erstmaligen Erkennen des Kurzperiodenkriteriums. Im vorliegenden Falle ist die Zuordnung der Ausgänge der Gatter 114, 214, 314, 414, 514 zu den Eingängen der UND-Gatter 115, 215, 315, 415, 515 so, daß jeweils das 33. Bit nach der erstmaligen Erkennung invertiert wird. Erfolgt im vorliegenden Falle die Erkennung beispielsweise erstmalig dadurch, daß der Ausgang des der ersten Verwürflerstufe zugeordneten UND-Gatters 114 auf den Wert logisch 1 geht, dann wird nach 6 x 5 = 30 Bittaktzeiten über das der dritten Verwürflerstufe zugeordnete UND-Gatter 315, das nachgeschaltete D-Flip-Flop 316 und das damit verbundene UND-Gatter 317 im dritten Modulo-2-Addierer 34 der dritten Verwürflerstufe V3 ein Bit invertiert.

Die Eingänge des UND-Gatters 60 können statt mit den Ausgängen der UND-Gatter 114 ... 514 auch mit den nichtinvertierenden Ausgängen der D-Flip-Flops 116 ... 516 verbunden sein. In diesem Falle ist durch die zusätzliche Teilerwirkung dieser D-Flip-Flops das Teilerverhältnis des Frequenzteilers 61 von 51 auf 41 zu verringern, es ergibt sich dadurch eine Unterdrückung unerwünschter Impulsspitzen auf der Verbindungsleitung zwischen dem Ausgang des UND-Gatters 60 und den Rücksetzeingängen der Teilerstufen 61 und 62.

4 Patentansprüche
4 Figuren

Unser Zeichen:
VPA
84 P 1 4 2 1 E

Patentansprüche

1. Selbstsynchronisierender Verwürfler mit n getakteten Schieberegisterstufen zur Erzeugung eines Signals mit einer Verwürflerperiode von $2^n-1$ Bit, wobei der Ausgang wenigstens einer Schieberegisterstufe mit dem Eingang eines Modulo-2-Addierers verbunden ist, d a d u r c h g e k e n n z e i c h n e t , daß p parallele Eingänge für jeweils eines von p parallelen Bits des zu verwürfelnden digitalen Signals vorgesehen sind, daß die Eingänge entsprechend der Folge der ankommenden Bits, mit dem p-ten Bit am ersten Eingang und den folgenden Bits an den nächsten Eingängen, geordnet und mit jeweils einer, wenigstens eine Schieberegisterstufe und wenigstens einen Modulo-2-Addierer enthaltenden Verwürflerstufe verbunden sind, daß die Anzahl p der parallelen Eingänge wenigstens um 1 kleiner als die Anzahl n der in den Verwürflerstufen enthaltenen getakteten Schieberegisterstufen ist, daß in Schieberichtung zunächst n-p Verwürflerstufen mit 2 getakteten Schieberegisterstufen und daran anschließend 2p-n Verwürflerstufen mit nur einer getakteten Schieberegisterstufe angeordnet sind, daß die Verwürflerstufen einen ersten und einen zweiten Modulo-2-Addierer (A1, A2) enthalten, wobei der Ausgang des ersten Modulo-2-Addierers mit dem einen Eingang des zweiten Modulo-2-Addierers verbunden ist, dessen anderer Eingang mit einem der p parallelen Eingänge für das zu verwürfelnde Signal verbunden ist, daß am Ausgang des zweiten Modulo-2-Addierers das verwürfelte Signal entnehmbar ist und außerdem der Eingang einer ersten getakteten Schieberegisterstufe angeschlossen ist, an derem Ausgang das um eine Taktperiode verzögerte verwürfelte digitale Signal entnehmbar ist und außerdem der Eingang einer weiteren getakteten Schieberegisterstufe angeschlossen ist, deren

Ah 1 Or / 28.5.1984

Takteingang dem Takteingang der ersten Schieberegisterstufe parallelgeschaltet ist und an deren Ausgang ein um
zwei Taktperioden verzögertes verwürfeltes digitales Signal entnehmbar ist, daß die Taktfrequenz des den Schieberegisterstufen zugeführten Taktsignals der Taktfrequenz
der zu verwürfelnden digitalen Signale geteilt durch die
Anzahl p der Verwürflerstufen entspricht und daß der eine
Eingang des ersten Modulo-2-Addieres mit dem Ausgang
einer Verwürflerstufe verbunden ist, an der das n-te
vorhergehende Bit des verwürfelten digitalen Signals ansteht und daß der andere Eingang des ersten Modulo-2-
Addierers mit einer Verwürflerstufe verbunden ist, an
der das m-te vorhergehende Bit des verwürfelten digitalen Signals ansteht und daß $m < n$ und ganzzahlig ist.

2. Selbstsynchronisierender Verwürfler nach Patentanspruch 1, d a d u r c h   g e k e n n z e i c h n e t ,
daß zur parallelen Verarbeitung von 4 Bit vier Verwürflerstufen (VS1 ... VS4) vorgesehen sind, die jeweils
einen Eingang (Di1 ... Di4) zur parallelen Aufnahme von
4 Bit des zu verwürfelnden digitalen Signals aufweisen,
daß die erste Verwürflerstufe (VS1) einen ersten Modulo-
2-Addierer (A1.1) aufweist, dessen Ausgang mit dem Eingang eines zweiten Modulo-2-Addierers (A1.2) verbunden
ist, dessen anderer Eingang mit dem Eingang (Di1) der
ersten Verwürflerstufe und dessen Ausgang mit dem Eingang einer ersten Schieberegisterstufe (SR1) sowie mit
einem Ausgang (Ds1) für das verwürfelte digitale Signal
verbunden ist, daß der Takteingang der ersten Schieberegisterstufe (SR1) mit einer Quelle für ein erstes Taktsignal T1 verbunden ist, das durch Frequenzteilung im
Verhältnis 4:1 aus dem Taktsignal der zu verwürfelnden
digitalen Signale erzeugt wurde, daß der erste Eingang
des ersten Modulo-2-Addieres (A1.1) der ersten Verwürflerstufe (VS1) mit dem zweiten Eingang des ersten Modulo-
2-Addierers (A2.1) der zweiten Verwürflerstufe (VS2) ver-

0164676

VPA
84 P 1 4 2 1 E

bunden ist, daß der Ausgang dieses Modulo-2-Addierers (A2.1) mit dem ersten Eingang des zweiten Modulo-2-Addierers (A2.2) und dessen zweiter Eingang mit dem Eingang (D12) der zweiten Verwürflerstufe (VS2) verbunden ist, daß der Ausgang des zweiten Modulo-2-Addierers (A2.2) mit dem Ausgang (Ds2) der zweiten Verwürflerstufe (VS2) und mit dem Eingang der ersten Schieberegisterstufe (SR2.1) der zweiten Verwürflerstufe (VS2) verbunden ist, daß der Ausgang dieser Schieberegisterstufe (SR2.1) mit dem Eingang einer zweiten Schieberegisterstufe (SR2.2) der gleichen Verwürflerstufe (VS2) und außerdem mit dem ersten Eingang eines ersten Modulo-2-Addierers (A4.1) der vierten Verwürflerstufe (VS4) verbunden ist, daß der Ausgang der zweiten Schieberegisterstufe (SR2.2) der zweiten Verwürflerstufe (VS2) mit dem zweiten Eingang des ersten Modulo-2-Addierers (A1.1) der ersten Verwürflerstufe (VS1) verbunden ist, daß der erste Eingang des ersten Modulo-2-Addierers (A2.1) der zweiten Verwürflerstufe (VS2) mit dem zweiten Eingang eines ersten Modulo-2-Addierers (A3.1) der dritten Verwürflerstufe (VS3) verbunden ist, dessen Ausgang mit dem einen Eingang eines zweiten Modulo-2-Addierers (A3.2) der gleichen Verwürflerstufe verbunden ist, daß der andere Eingang des zweiten Modulo-2-Addierers (A3.2) mit dem Eingang (Di3) der dritten Verwürflerstufe (VS3) verbunden ist, daß der Ausgang dieses zweiten Modulo-2-Addierers (A3.2) mit dem Ausgang (Ds3) der dritten Verwürflerstufe und außerdem mit einem Eingang einer ersten Schieberegisterstufe (Sr3.1) der dritten Verwürflerstufe (VS3) verbunden ist und der Ausgang dieser Schieberegisterstufe mit dem Eingang einer zweiten Schieberegisterstufe (SR3.2) innerhalb der gleichen Verwürflerstufe verbunden ist, daß der Ausgang der zweiten Schieberegisterstufe (SR3.2) mit dem zweiten Eingang des ersten Modulo-2-Addierers (A2.1) der zweiten Verwürflerstufe (VS2) verbunden ist, daß der erste Eingang des ersten Modulo-2-Addierers (A3.1) der dritten Verwürflerstufe mit einem zweiten Eingang eines ersten Modulo-2-Addierers (A4.1) der vierten Verwürflerstufe verbunden ist, daß dessen Ausgang mit dem einen Eingang eines zweiten Modulo-2-Addierers (A4.2) der vierten Verwürflerstufe (VS4) und dessen zweiter Eingang mit dem Eingang (Di4) der vierten Verwürflerstufe verbunden ist, daß der Ausgang dieses zweiten Modulo-2-Addierers (A4.2) mit dem Ausgang (Ds4) der vierten Verwürflerstufe und mit dem Eingang einer ersten Schieberegisterstufe (SR4.1) der vierten Verwürflerstufe (VS4) verbunden ist, daß der Ausgang dieser zweiten Schieberegisterstufe (SR4.1) mit dem Eingang einer zweiten Schieberegisterstufe (SR4.2) der vierten Verwürflerstufe verbunden ist und der Ausgang dieser Schieberegisterstufe mit dem zweiten Eingang des ersten Modulo-2-Addierers (A3.1) der dritten Verwürflerstufe (VS3) verbunden ist und daß die Takteingänge sämtlicher Schieberegisterstufen miteinander und mit der Quelle für das erste Taktsignal (T1) verbunden sind.

3. Selbstsynchronisierender Verwürfler nach Patentanspruch 1, d a d u r c h   g e k e n n z e i c h n e t , daß bei einer Verwürfelperiode von 31 Bit zur parallelen Verwürfelung von jeweils 4 Bit vier parallele Eingänge (Di1 ... Di4) für das zu verwürfelnde digitale Signal vorgesehen sind, die jeweils mit einer von vier Verwürflerstufen (VS'1 ... VS'4) verbunden sind, daß die Verwürflerstufen jeweils einen ersten Modulo-2-Addierer (A'1.1 ... A'4.1) enthalten, dessen Ausgang mit dem einen Eingang eines zweiten Modulo-2-Addierers (A'1.2 ... A'4.2) verbunden sind, dessen anderer Eingang mit einem der vier parallelen Eingänge für das zu verwürfelnde digitale Signal verbunden ist und daß der Ausgang des zweiten Modulo-2-

C164676
VPA 84 P 1421 E

Addierers jeweils mit dem Ausgang (Ds'1 ... Ds'4) für das verwürfelte digitale Signal und außerdem mit dem D-Eingang eines als Schieberegisterstufe wirksamen getakteten D-Flip-Flops verbunden sind, daß der Ausgang des zweiten Modulo-2-Addierers (A'1.2) der ersten Verwürflerstufe mit dem zweiten Eingang des ersten Modulo-2-Addierers (A'3.1) der dritten Verwürflerstufe verbunden ist, daß der Ausgang des zweiten Modulo-2-Addierers (A'2.2) der zweiten Verwürflerstufe mit dem zweiten Eingang des ersten Modulo-2-Addierers (A'4.1) der vierten Verwürflerstufe verbunden ist, daß der Ausgang der Schieberegisterstufe (SR'1) der ersten Verwürflerstufe mit dem ersten Eingang des ersten Modulo-2-Addierers der zweiten Verwürflerstufe verbunden ist, daß der Ausgang der Schieberegisterstufe (SR'2) der zweiten Verwürflerstufe mit dem zweiten Eingang des ersten Modulo-2-Addierers (A'3.1) der dritten Verwürflerstufe verbunden ist, daß der Ausgang der Schieberegisterstufe (SR'3) der dritten Verwürflerstufe mit dem ersten Eingang des ersten Modulo-2-Addierers (A'1.1) der ersten Verwürflerstufe und mit dem zweiten Eingang des ersten Modulo-2-Addierers (A'4.1) der vierten Verwürflerstufe verbunden ist, daß die vierte Verwürflerstufe (VS'4) eine erste und eine zweite Schieberegisterstufe (SR'4.1, SR'4.2) enthält und der Ausgang der ersten Schieberegisterstufe mit dem Eingang der zweiten Schieberegisterstufe und dem ersten Eingang des ersten Modulo-2-Addierers (A'2.1) der zweiten Verwürflerstufe verbunden ist, daß der Ausgang der zweiten Schieberegisterstufe (SR'4.2) der vierten Verwürflerstufe (VS'4) mit dem zweiten Eingang des ersten Modulo-2-Addierers (A'1.1) der ersten Verwürflerstufe verbunden ist und daß die Takteingänge sämtlicher Schieberegisterstufen miteinander und mit einer Quelle (T1) für ein Taktsignal verbunden sind, daß durch Frequenzteilung im Verhältnis 4:1 aus dem Bittaktsignal für die zu verwürfelnden digitalen
Signale erzeugt ist.

4. Selbstsynchronisierender Verwürfler nach Patentanspruch 1, d a d u r c h  g e k e n n z e i c h n e t ,
daß die Unterdrückung von Kurzperioden dadurch erfolgt,
daß in wenigstens einer Verwürflerstufe zwischen erstem
und zweiten Modulo-2-Addierer ein dritter Modulo-2-Addierer (14, 24, 34, 44, 54) eingefügt ist, dessen einer
Eingang mit dem Ausgang des ersten Modulo-2-Addierers
und dessen Ausgang mit dem Eingang des zweiten Modulo-2-
Addierers verbunden ist, und dessen zweiter Eingang an
den Ausgang einer Zähleinrichtung für übereinstimmende
Bits, die im Abstand einer zu unterdrückenden Kurzperiode
auftreten, angeschlossen ist, wobei die Zähleinrichtung
bei Überschreiten einer voreingestellten Anzahl übereinstimmender Bits einen Impuls ergibt.

FIG 1

2/5

FIG 2

# FIG 3

FIG 4a

4/5

016467 6

FIG 4b

Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | ELEKTRONIK, Band 32, Nr. 26, Dezember 1983, Seiten 67-70, München, DE; T. HERMES u.a.; "Parallel arbeitende Scrambler, Descrambler und Zufallsfolgen-Generatoren" * Seite 68, linke Spalte, Zeile 41 - Seite 69, linke Spalte, Zeile 11 * | 1-3 | H 04 L 25/49 |
| A | FR-A-2 410 921 (S.A.T.) * Seite 2, Zeilen 6-26; Figur 3 * | 1-3 | |
| A | NATIONAL TELECOMMUNICATIONS CONFERENCE, 29. Novenber - 3. Dezember 1981, New Orleans, Seiten E8.6.1 - E8.6.5, IEEE, New York, US; O. BRUGIA u.a.: "A self-synchronizing parallel scrambler for high digit rate transmission systems using AMI as a line code" * Figuren 4,5,7 * | 1 | RECHERCHIERTE SACHGEBIETE (Int. Cl.4) H 04 L |
| A | REVIEW OF THE ELECTRICAL COMMUNICATION LABORATORIES, Band 24, Nr. 9/10, September/Oktober 1976, Seiten 725-736, Tokyo, JP; K. OHTAKE u.a.: "Digital multiplexer for 400 Mb/s transmission systems" * Seite 732, linke Spalte, Zeile 18 - Seite 733, rechte Spalte, Zeile 26 * | 1 | |

Der vorliegende Recherchenbericht wurde für alle Patentansprüche erstellt.

| Recherchenort DEN HAAG | Abschlußdatum der Recherche 16-08-1985 | Prüfer VANDEVENNE M.J. |
|---|---|---|